# DEMANDE DE BREVET EUROPEEN

(11) **EP 1 862 703 A1**
(43) Date de publication de la demande: **05.12.2007**
(21) Numéro de dépôt: 07107839.8
(22) Date de dépôt: 09.05.2007
(51) Int. Cl.: F16H 7/24

(54) **Dispositif de montage d'une courroie élastique sure une poulie**

(30) Priorité: 29.05.2006 FR 0651931
(71) Demandeur: PEUGEOT CITROËN AUTOMOBILES S.A., 78140 Velizy Villacoublay (FR)
(72) Inventeur: Debuire, Fabien, 95240 Cormeilles en Parisis (FR)
(74) Mandataire: Allain, Laurent

(57) **Abrégé**

Dispositif (1) de montage d'une courroie élastique (14) autour d'une poulie (15), comprenant des moyens mécaniques (3,4) de guidage et de glissement de ladite courroie (14) vers ladite poulie (15), lesdits moyens (3,4) étant, d'une part, solidarisés à une pièce circulaire (2) mue en rotation, et pouvant, d'autre part, être déplacés en translation de manière à adapter ledit dispositif (1) au diamètre de ladite poulie (15), lesdits moyens mécaniques (3,4) comprennent une butée de déviation (4) fixée à une piste de guidage incurvée (3), recouvrant partiellement la poulie (15).

## Description

Le domaine technique de l'invention concerne les dispositifs de montage d'une courroie élastique autour d'une poulie, comme, par exemple, une courroie accessoire d'un moteur de véhicule automobile, passant autour de la poulie vilebrequin. Plus particulièrement, l'invention se rapporte à un dispositif de montage réglable d'une courroie élastique, pouvant s'adapter au diamètre de la poulie.

Les dispositifs de montage d'une courroie élastique autour d'une poulie existent déjà et ont fait l'objet de brevet. On peut, par exemple, citer la demande de brevet WO 2005/024272 qui se rapporte à un dispositif permettant de monter une courroie élastique autour d'une poulie. La description ne divulgue ni procédé ni caractéristiques techniques permettant audit dispositif de s'adapter au diamètre de la poulie.

Les dispositifs de montage selon l'invention, d'une courroie élastique autour d'une poulie, impliquent des pièces mobiles pouvant se fixer en différentes positions, pour adapter lesdits dispositifs à un diamètre de poulie donné. De cette manière, les dispositifs selon l'invention peuvent, par un simple rajustement des pièces, s'adapter à des poulies de différents calibres.

La présente invention a pour objet un dispositif de montage d'une courroie élastique autour d'une poulie, comprenant des moyens mécaniques de guidage et de glissement de ladite courroie vers ladite poulie, lesdits moyens étant solidarisés à une pièce circulaire mue en rotation. La principale caractéristique d'un dispositif selon l'invention, est que lesdits moyens sont réglables, de manière à adapter ledit dispositif au diamètre de ladite poulie. En effet, les moyens sont constitués essentiellement de pièces mécaniques mobiles, qui peuvent être déplacées puis fixées à des emplacements appropriés, dictés notamment par le diamètre de la poulie.

Préférentiellement, les moyens peuvent être déplacés en translation.

De façon avantageuse, lesdits moyens comprennent une butée de déviation fixée à une piste de guidage incurvée recouvrant partiellement la poulie.

De façon préférentielle, la butée est assimilable à un coin et la piste de guidage est en forme de segment de couronne, ledit coin étant disposé sur ladite piste de façon à réduire progressivement sa largeur. Ainsi, la piste définit un arc de cercle autour duquel est placée la courroie. Lorsque la pièce circulaire tourne et que la courroie arrive au niveau de la butée, elle est progressivement déviée de son plan de rotation et vient s'enrouler autour de la poulie.

Préférentiellement, la piste peut être déplacée suivant un axe radial de la pièce circulaire, puis fixée à un emplacement donné le long dudit axe. De cette manière, la piste incurvée peut être rapprochée ou être éloignée du centre de la pièce circulaire pour s'adapter aux dimensions de la poulie. La seule exigence imposée par le dispositif, est que la piste incurvée, qui sert à guider la courroie, recouvre partiellement la poulie et en étant le plus proche possible de ladite poulie, sans la toucher. En effet, puisque la piste sert notamment à faire glisser la courroie sur la poulie, ladite piste doit se retrouver quasiment dans la continuité de la surface latérale externe de ladite poulie pour favoriser le glissement.

Avantageusement, une position extrême de la piste le long de l'axe radial est définie lorsque ladite piste vient en limite du contour de la pièce circulaire. Autrement dit, le dispositif est dimensionné de sorte que la piste n'émerge pas de la pièce circulaire rotative. En effet, ladite pièce circulaire possède une face contre laquelle s'appuie la courroie au moment de la rotation de ladite pièce, ladite face constituant, pour l'occasion, un rail de guidage pour la courroie. En émergeant de la pièce circulaire, la courroie ne serait plus assurée de se maintenir sur la piste.

De façon préférentielle, la pièce circulaire est solidaire d'un arbre, et la poulie possède un alésage central destiné à recevoir ledit arbre. De cette manière, la mise en rotation de la pièce circulaire va entraîner celle de la poulie par l'intermédiaire de l'arbre. La mise en rotation simultanée de ces deux éléments va faciliter le montage de la courroie sur ladite poulie.

L'invention porte également sur une utilisation d'un dispositif de montage selon l'invention pour mettre en place une courroie accessoire autour de la poulie vilebrequin d'un moteur de véhicule automobile.

Les dispositifs de montage selon l'invention présentent l'avantage d'être de conception simple, en faisant intervenir un nombre restreint de pièces ayant une géométrie usuelle ne nécessitant pas d'usinage complexe. Ils présentent également l'avantage de fonctionner rapidement sans jamais avoir à recourir à un effort physique prononcé de la part de l'opérateur.

On donne ci-après une description détaillée d'un mode de réalisation préféré d'un dispositif de montage selon l'invention en se référant aux figures 1 à 10.
La figure 1 est une vue en perspective d'une partie d'un dispositif de montage selon l'invention.
La figure 2 est une vue en perspective sous un autre angle du dispositif de la figure 1.
La figure 3 est une vue de face d'un dispositif de montage selon l'invention pour une position donnée des moyens de guidage et de glissement.
La figure 4 est une vue de face du dispositif de la figure 3 pour une autre position des moyens de guidage et de glissement.
La figure 5 est une vue du dessus du dispositif de la figure 1 en présence d'une poulie.
La figure 6 représente le dispositif de la figure 1 en présence d'une poulie.
Les figures 7a, 7b, 7c 7d sont des figures de coté d'un dispositif de montage selon l'invention, montrant l'enroulement progressif de la courroie autour de la poulie à différents instants.

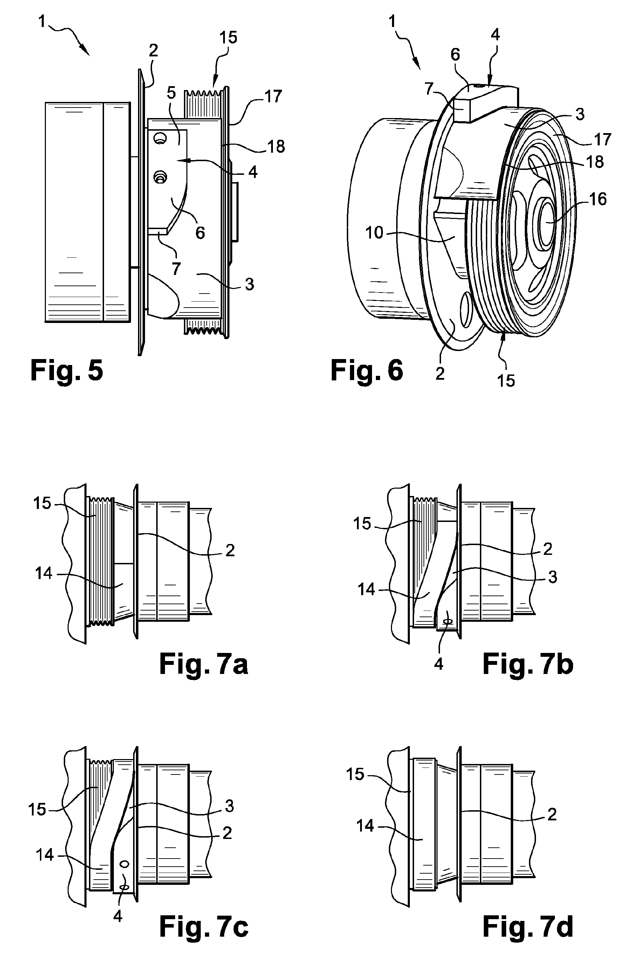

La figure 7a correspond à l'instant initial.
Les figures 7b et 7c correspondent à des instants intermédiaires pour lesquels la courroie s'enroule progressivement autour de la poulie.
La figure 7d correspond à l'instant final pour lequel la courroie est complètement enroulée autour de la poulie.

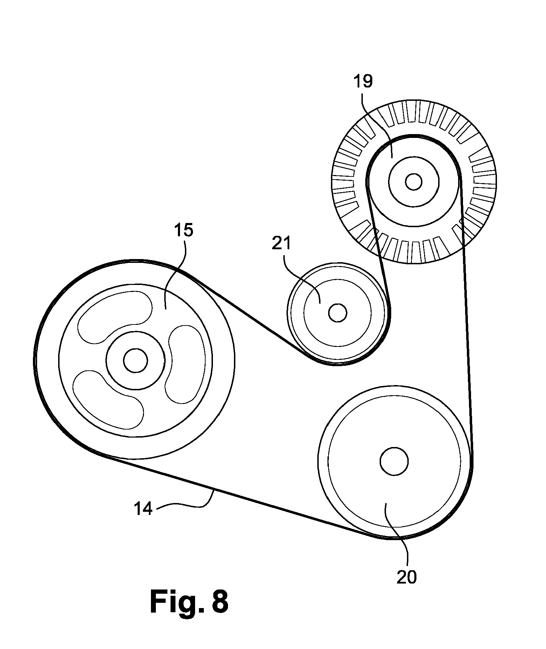

La figure 8 est une vue en perspective d'une courroie accessoire montée sur la poulie vilebrequin d'un moteur de véhicule automobile, au moyen d'un dispositif de montage selon l'invention.

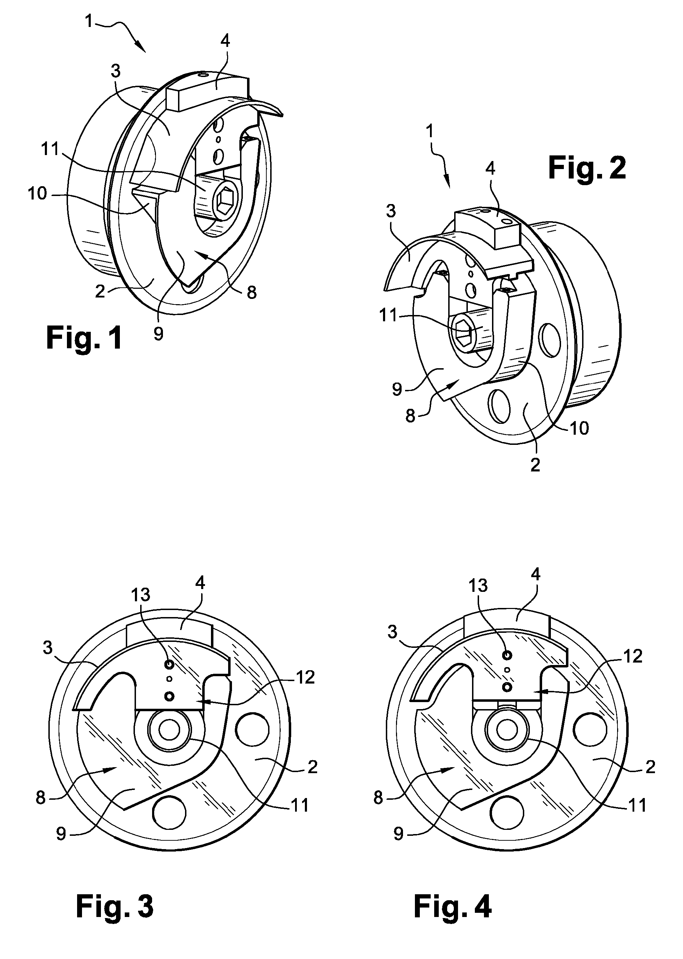

En se référant aux figures 1 et 2, un dispositif de montage 1 d'une courroie élastique autour d'une poulie comprend une pièce circulaire 2 plane, présentant une face sur laquelle est fixée une pièce 12 comportant une piste 3 incurvée ayant la forme d'un segment de couronne circulaire. Ladite piste 3 est de faible épaisseur et est surmontée d'une butée 4 ayant la forme d'un coin. En se référant à la figure 5, la butée 4 présente une partie rectangulaire 5 munie de deux alésages permettant d'insérer deux vis de fixation, ladite partie rectangulaire 5 étant prolongée par une partie convergente 6 se terminant par un méplat 7 transversal par rapport au sens de la longueur de la piste 3. La butée 4 est fixée sur la piste 3 au moyen de deux vis, de manière à venir effleurer la pièce circulaire 2 sans jamais venir à son contact. La largeur de la butée 4 est inférieure à la largeur de la piste 3, de sorte que la largeur minimale de la piste 3 au niveau de la butée 4 est approximativement égale à la largeur de la courroie. La pièce circulaire 2 comporte également sur la même face, une deuxième pièce 8 incurvée possédant un rebord 9 plan et parallèle à ladite pièce circulaire 2. La partie de ladite deuxième pièce 8 délimitée à la fois par ledit rebord 9 et la pièce 2 circulaire, est incurvée et peut être assimilée à une gorge 10 de guidage pour la courroie. La deuxième pièce 8 est fixée de façon inamovible à la pièce circulaire 2 et présente une incurvation qui est complémentaire de celle de la piste 3. Ainsi, la piste 3 et la gorge 10 de la deuxième pièce 2 se retrouvent sensiblement en continuité l'une de l'autre, et définissent un passage dont le tracé est arrondi et dans lequel vient partiellement s'enrouler la courroie élastique. Suivant la position da la piste 3 sur la pièce circulaire 2, ledit arrondi se retrouve plus ou moins marqué. La pièce circulaire 2 possède une protubérance centrale 11 comportant un alésage de section hexagonale destinée à recevoir un arbre d'entraînement (non représenté).

En se référant aux figures 3 et 4, la pièce 12 comprenant la piste incurvée 3, possède une série de trois alésages 13 alignés, et ladite pièce 12 est fixée sur la pièce circulaire 2 de sorte que lesdits alésages 13 se retrouvent alignés selon un axe radial de ladite pièce circulaire 2. Lesdits alésages 13 sont destinés à recevoir des vis de fixation pour solidariser, en différentes positions, la pièce 12 comportant la piste incurvée 3, à la pièce circulaire 2. La figure 3 montre une première position possible de la piste 3 qui est située proche du centre de la pièce circulaire 2. La figure 4 montre une autre position de la piste 3 qui se retrouve plus éloignée dudit centre. Pour ces deux configurations, la deuxième pièce 8 est restée fixée à la même place. Le passage constitué par ladite piste 3 et la gorge 10 de la deuxième pièce 8, et dans lequel est placée la courroie 14, a un tracé qui est plus ou moins arrondi, de façon à mieux adapter le dispositif au diamètre de la poulie.

En se référant aux figures 5 et 6, la poulie 15 autour de laquelle la courroie va être montée, possède un alésage central 16 dans lequel vient se loger l'arbre d'entraînement. De cette manière, la pièce circulaire 2 et ladite poulie 15 sont parallèles entre elles et sont traversées par le même arbre. Lesdits éléments 2,15 possèdent ainsi le même axe de rotation et se retrouvent donc en position concentrique. Un moteur (non représenté) entraîne la mise en rotation de la pièce circulaire 2 et donc de l'arbre qui lui est solidaire, provoquant du même coup la rotation de la poulie 15 traversée par ledit arbre. La poulie 15 est partiellement recouverte par la piste 3 qui vient effleurer la surface latérale externe de ladite poulie 15 sans la toucher. De façon plus précise, la poulie 15 est enfilée autour de l'arbre d'entraînement jusqu'à venir au contact du rebord 9 de la deuxième pièce 8 fixe, et de manière à ce que la piste 3 recouvre une partie de la poulie sur toute sa largeur. Idéalement, une surface latérale circulaire 17 de la poulie 15 affleure le bord longitudinal libre 18 de la piste 3 incurvée.

Le montage d'une courroie élastique 14 sur une poulie 15 à partir d'un dispositif 1 selon l'invention, s'effectue comme suit.
En se référant à la figure 7a, la poulie 15 est positionnée par rapport à la pièce circulaire 2 et par rapport à la piste 3, conformément à la description des figures 5 et 6. La courroie 14 est initialement placée dans le passage constitué par la piste 3 et la gorge 10 de la deuxième pièce 8. En se référant aux figures 7b et 7c, un moteur déclenche la mise en rotation simultanée de la pièce circulaire 2, de la poulie 15 et de la courroie élastique 14. La butée 4 tend alors à repousser la courroie 14 vers la poulie 15. Au fur et à mesure de la rotation desdits éléments, la courroie 14 s'enroule progressivement autour de la poulie 15. En se référant à la figure 7d, la courroie élastique 14 finit par quitter complètement la piste 3 et par se retrouver intégralement enroulée autour de la poulie 15.
En se référant à la figure 8, une courroie 14 accessoire d'un moteur de véhicule automobile est élastique et est conçue pour ne pas se déformer de plus de 5 % de sa longueur. Ladite courroie 14 est initialement positionnée à la main autour de la poulie 19 alternateur et autour de la poulie 20 compresseur de climatisation. Le dispositif de montage 1 selon l'invention est alors amené en face de la poulie 15 vilebrequin et est alors agencé à ladite poulie 15 selon les modalités détaillées dans la description précédente. La courroie 14 est ensuite placée à la main dans le passage constitué par la piste 3 et la gorge 10. La pièce circulaire 2 et ladite poulie vilebrequin 15 sont mises en rotation jusqu'à ce que la courroie 14 soit complètement enroulée autour de ladite poulie 15. Un galet 21 fixe de petite taille permet de modifier le chemin de la courroie 14. Le dispositif 1 de montage selon l'invention qui est applicable aux courroies élastiques, permet de s'affranchir des galets tendeurs, de grande taille et coûteux, habituellement utilisés pour le montage des courroies inélastiques.

## Revendications

1. Dispositif (1) de montage d'une courroie élastique (14) autour d'une poulie (15), comprenant des moyens mécaniques (3,4) de guidage et de glissement de ladite courroie (14) vers ladite poulie (15), lesdits moyens (3,4) étant, d'une part, solidarisés à une pièce circulaire (2) mue en rotation, et pouvant, d'autre part, être déplacés en translation de manière à adapter ledit dispositif (1) au diamètre de ladite poulie (15), **caractérisé en ce que** lesdits moyens comprennent une butée (4) de déviation fixée à une piste (3) de guidage incurvée, recouvrant partiellement la poulie (15).

2. Dispositif selon la revendication 1, **caractérisé en ce que** la butée (4) est assimilable à un coin et **en ce que** la piste (3) de guidage est en forme de segment de couronne, ledit coin (4) étant disposé sur ladite piste (3) de façon à réduire progressivement sa largeur.

3. Dispositif selon la revendication 2, **caractérisé en ce que** la piste (3) peut être déplacée suivant un axe radial de la pièce circulaire (2), puis fixée à un emplacement donné le long dudit axe.

4. Dispositif selon la revendication 3, **caractérisé en ce qu'**une position extrême de la piste (3) le long de l'axe radial est définie lorsque ladite piste (3) affleure le contour de la pièce circulaire (4).

5. Dispositif selon l'une quelconque des revendications précédentes, **caractérisé en ce que** la pièce circulaire (2) est solidaire d'un arbre, et **en ce que** la poulie (15) possède un alésage (16) central destiné à recevoir ledit arbre.

6. Utilisation d'un dispositif selon l'une quelconque des revendications précédentes pour monter une courroie (14) accessoire autour de la poulie vilebrequin (15) d'un moteur de véhicule automobile.
